# NEUE EUROPÄISCHE PATENTSCHRIFT

(11) **EP 1 030 754 B2**
(45) Veröffentlichungstag und Bekanntmachung des Hinweises auf die Entscheidung über den Einspruch: **07.02.2007**
(45) Hinweis auf die Patenterteilung: 06.02.2002
(21) Anmeldenummer: 98955575.0
(22) Anmeldetag: 11.11.1998
(51) Int. Cl.: B23B 5/18, B23C 3/06, B23D 37/00

(54) **HS-FRÄSEN + DREHEN/DREHRÄUMEN/DREH-DREHRÄUMEN**
HIGH SPEED MILLING AND TURNING/ TURN BROACHING / TURNING AND TURN BROACHING
FRAISAGE HAUTE VITESSE + TOURNAGE / BROCHAGE PAR TOURNAGE/ TOURNAGE - BROCHAGE PAR TOURNAGE

(30) Priorität: 11.11.1997 DE 19749939
(43) Veröffentlichungstag der Anmeldung: 30.08.2000
(73) Patentinhaber: BOEHRINGER WERKZEUGMASCHINEN GmbH, D-73033 Göppingen (DE)
(72) Erfinder: SANTORIUS, Rolf, D-73066 Uhingen-Nassachmühle (DE); KOHLHASE, Matthias, D-78713 Schramberg-Sulgen (DE)
(74) Vertreter: Alber, Norbert
(86) Internationale Anmeldenummer: PCT/EP1998/007232
(87) Internationale Veröffentlichungsnummer: WO 1999/024196

(56) Entgegenhaltungen:
- EP-A- 0 523 573
- WO-A-91/14799
- DD-A- 204 106
- DE-A- 4 329 610
- FR-A- 1 403 313
- US-A- 5 078 556
- Artikel "Kurbelwellenc mit Hochgeschwindigkeit" NC-Fertigung 6/96
- Modern metal cutting - a practical Handbook, AB Sandvik Coromant,1994

## Beschreibung

Die Erfindung betrifft ein Verfahren zum spanenden Bearbeitung von Werkstücken gemäß dem Oberbegriff des Patentanspruchs 1 und eine Vorrichtung gemäß dem Oberbegriff des Patentanspruchs 11 und wie z.B. aus US-A-5078556 bekannt. Ein typischer Vertreter eines solchen Werkstückes ist eine Kurbelwelle, wie sie für Hubkolben-Verbrennungsmotoren, Hubkolben-Verdichter etc. verwendet wird.

### II. Technischer Hintergrund

Die Bearbeitung der rohen, also geschmiedeten oder gegossenen, aus Stahl oder Guß bestehenden, Kurbelwelle, erfolgt heute in der Regel durch die bekannten spanenden Bearbeitungsverfahren. Da der häufigste Anwendungsfall für Kurbelwellen die in einem Verbrennungsmotor eines Kraftfahrzeuges ist, werden derartige Kurbelwellen in der Regel in sehr großen Stückzahlen hergestellt, weshalb meist bei der Auswahl des Bearbeitungsverfahrens und der hierfür gewählten Maschinenausstattung dasjenige Verfahren gewählt wird, welches die kürzestmögliche Bearbeitungszeit pro Kurbelwelle erwarten läßt.

Nach heutigem Standard bedeutet dies in der Regel, daß die Mittellager der Kurbelwelle mittels Drehräumen bzw. Dreh-Drehräumen, beispielsweise gemäß DE 35 23 274 C2 oder EP 86 108 666 bearbeitet werden, während die Hublager und ggf. auch die Wangenstirnflächen mittels Außenfräsen, insbesondere Hochgeschwindigkeits-Außenfräsen, beispielsweise gemäß DE 196 26 627 A1 bearbeitet werden oder mittels Innenfräsen (Wirbeln), oder mittels Drehfräsen, z. B. gemäß DE 44 46 475.

Alternativ zum Außenfräsen kann auch das sogenannte Drehfräsen eingesetzt werden. U. U. findet die jeweilige spanende Bearbeitung im bereits gehärteten Zustand des Werkstückes statt. Dabei soll unter den eben verwendeten Begriffen folgendes verstanden werden:

### Drehräumen:

Auf dem Umfang eines scheibenförmigen Werkzeuges sind in Umfangsrichtung beabstandet Drehräumschneiden angeordnet, deren Abstand zur Mitte des drehbaren scheibenförmigen Werkzeuges zunimmt. Dieses scheibenförmige Werkzeug dreht mit seiner Achse parallel neben der Achse der Kurbelwelle, und durch Entlangschwenken der Drehräumschneiden am Umfang der wesentlich schneller drehenden Kurbelwelle (ca. 1.000 U/min) wird Material an der Umfangsfläche abgenommen. Falls die Drehräumschneiden zur Mitte des Werkzeuges alle den gleichen Abstand besitzen, muß zwischen den Werkzeugschneiden eine Zustellung radial zur Kurbelwelle, in X-Richtung, erfolgen. Diese Vorgänge können auf mehrere Schneiden verteilt werden, bzw. durch Schwesterwerkzeuge ergänzt werden.

### Dreh-Drehräumen:

Dabei handelt es sich um das vorbeschriebene Drehräumen, wobei diesem ein Einstech-Drehvorgang vorgeschaltet ist, welcher mittels einer Schneide durchgeführt wird, die ebenfalls auf dem Umfang des scheibenförmigen Werkzeugs angeordnet ist. Das Einstechdrehen wird durchgeführt, indem sich das scheibenförmige Werkzeug während des Eingriffs der Schneide nicht dreht, sondern lediglich radial gegen das Werkstück vorwärts bewegt wird.

### Außenfräsen:

Auch hier sind die Schneiden auf dem Umfang eines scheibenförmigen Werkzeuges angeordnet, welches drehend antreibbar ist mit einer Achse parallel zur Achse des Werkstückes. Die Schnittgeschwindigkeit resultiert jedoch primär aus der Drehung des Werkzeuges, während sich das Werkstück nur mit ca. 10 U/min so lange dreht, bis ein mindestens vollständiger Umlauf des Werkzeuges um die zu bearbeitende rotationssymmetrische Fläche des Werkstückes vollzogen ist.

Vor allem bei großen Aufmaßen sind mehrere Umläufe des Werkzeuges notwendig, und selbst wenn aufgrund des Aufmaßes ein einziger Durchgang ausreichend erscheint, ist oft wegen des tangentialen Ein- und Ausfahrens des Werkzeuges mehr als ein vollständiger Umlauf notwendig.

Das scheibenförmige Werkzeug ist über den gesamten Umfang mit Fräszähnen besetzt.

Der Abstand der Schneiden in Umfangsrichtung zueinander kann ggf. kleiner sein als beim Drehräumen bzw. Dreh-Drehräumen, bei welchem meist beabsichtigt ist, die Bearbeitung mit der einen Schneide zu beenden, bevor die nächste Schneide in Eingriff gerät.

### Scheibenförmiges Werkzeug:

In der Regel wird es sich dabei um eine Kreisscheibe handeln. Theoretisch sind jedoch auch nicht kreisförmige Scheiben, z. B. Ellipsen etc., verwendbar. Vorzugsweise weisen die Scheiben jedoch immer nur konvex nach außen gekrümmte Umfangskonturen und dabei insbesondere keine harten Absätze in der Umfangskontur auf. Falls Kavitäten in der Umfangskontur vorhanden sind, sind diese nicht mit Schneiden besetzt.

### Drehfräsen:

Im Gegensatz zum Außenfräsen wird das Drehfräsen mit einem meist fingerförmigen Fräser betrieben, dessen Drehachse orthogonal zur Rotationsachse des zu bearbeitenden Werkstückes steht.

Mit der einen oder den mehreren stirnseitigen Schneiden eines solchen Fingerfräsers werden die Umfangsflächen bearbeitet, und mit den auf den Mantel des Fingerfräsers angeordneten Schneiden die Stirnflächen des Werkstückes.

### Hochgeschwindigkeitsfräsen (Drehfräsen oder Außenfräsen):

Darunter wird Fräsen mit einer Schnittgeschwindigkeit von z. B. bei Stahl: über 130 m/min, insbesondere über 180 m/min, bei Guß: über 150 m/min, insbesondere über 200 m/min, bei ALU über 300 m/min, insbesondere über 500 m/min verstanden. Unterstützt werden derartige Schnittgeschwindigkeiten vor allem durch eine positive Schneidengeometrie und die entsprechende Schneidstoffwahl.

Durch diese hohe Schnittgeschwindigkeit werden die beim Frässystem Immanenten Nachteile des unterbrochenen Schnittes so stark minimiert, daß die Vorteile überwiegen.

Dabei wurden bisher die Bearbeitungen Drehen/Drehräumen/Dreh-Drehräumen einerseits sowie die Bearbeitung durch Außenfräsen oder Drehfräsen, also allgemein das Fräsen, andererseits nicht kombiniert zum Einsatz gebracht, da dies aufgrund der völlig anderen notwendigen Drehzahlbereiche für das Werkstück als unsinnig betrachtet wurde.Während beim Drehen/Drehräumen/ Dreh-Drehräumen die Schnittgeschwindigkeit primär aus der Drehzahl des Werkstükkes, die bei ca. 1.000 U/min für eine Pkw-Kurbelwelle liegt, erzielt wurde, und das scheibenförmige Werkzeug nur mit einer Geschwindigkeit von weniger als 30 U/min eingeschwenkt bzw. gedreht wurde, ist dies beim AußenfräsenlDrehfräsen, insbesondere beim Hochgeschwindigkeitsfräsen mit diesen Verfahren, etwa diametral umgekehrt.

Entsprechend liegen auch die bei solchen Bearbeitungen auftretenden Probleme auf völlig unterschiedlichen Gebieten:

Beim Drehen/Drehräumen/Dreh-Drehräumen ist allein schon aufgrund der hohen Drehzahl des Werkstückes eine Realisierung der C-Achse (Drehlagenüberwachung des Werkstückes) nicht notwendig, da eine davon abhängige koordinierte Nachführung des Werkzeuges in X-Richtung ohnehin in dieser Geschwindigkeit nicht möglich ist.

Die Hauptschwierigkeiten aufgrund der hohen Drehzahlen liegen also im Bereich der Spannkraft, des Unwuchtausgleichs etc.

Beim Außenfräsen/Drehfräsen dagegen ist - da hiermit unter anderem die Hublager bearbeitet werden sollen - eine Realisierung der C-Achse unbedingt notwendig. Die Probleme liegen in der ausreichend steifen Spannung bzw. Abstützung des Werkstückes sowie in der - nur einseitigen - stabilen und exakten Einspannung des großen, schweren Werkzeuges. Insbesondere bei hohen Genauigkeiten besteht das Problem des guten Laufes und Wuchtzustandes des Werkzeuges und der Werkzeugachse.

### III. Darstellung der Erfindung

### a) Technische Aufgabe

Es ist daher die Aufgabe gemäß der vorliegenden Erfindung, ein Verfahren sowie eine Vorrichtung zum Bearbeiten von Werkstücken mit rotationssymmetrischen, auch exzentrischen, Flächen, insbesondere von Kurbelwellen, zu schaffen, durch die eine Minimierung der Rüst- und Nebenzeiten erreicht wird, insbesondere ein Umspannen des Werkstückes auf eine andere Maschine vermieden wird, und sowohl große Losgrößen als auch kleine Stückzahlen wirtschaftlich bearbeitet werden.

### b) Lösung der Aufgabe

Diese Aufgabe wird durch die kennzeichnenden Merkmale der Ansprüche 1 und 9 gelöst. Vorteilhafte Ausführungsformen ergeben sich aus den Unteransprüchen.

Indem zwei prinzipiell unterschiedliche Verfahren - was die Bewirkung der Relativgeschwindigkeit zwischen Werkzeug und Werkstück betrifft - am Werkstück zum Einsatz gebracht werden, kann für die jeweilige Arbeitsstelle und damit in der Summe über das Werkstück betrachtet die sowohl technisch als auch wirtschaftlich günstigste Bearbeitungsart gewählt werden. Werden die beiden Verfahren auf ein und derselben Maschine angewandt, entfallen erhebliche Rüst- und Nebenzeiten für das Umsetzen des Werkstückes auf eine andere Maschine, sowie die durch das Umspannen bedingten Bearbeitungsungenauigkeiten.

Dabei wird das Werkstück auch innerhalb der Maschine nicht vollständig ausgespannt und neu eingespannt, sondern nur auf einer Seite der Kurbelwelle die Spannung kurzzeitig aufgehoben.

Auf diese Art und Weise ist die Bearbeitung der Mittellager durch Drehräumen bzw. Dreh-Drehräumen möglich, während die Hublagerzapfen in der gleichen Aufspannung mittels Außenfräsen oder Drehfräsen bearbeitet werden können und ebenso die Wangenstirnflächen.

Wenn zusätzlich die Möglichkeit besteht, die Kurbelwelle zwischen Spitzen aufzunehmen und das zur Bearbeitung notwendige Drehmoment zu erbringen, können innerhalb der gleichen Maschine und mittels Drehräumen oder Dreh-Drehräumen zuerst auch der Endflansch und der Endzapfen der Kurbelwelle bearbeitet werden, um an diesen dann bearbeiteten Flächen eine Spannung mittels Spannbacken am Umfang vornehmen zu können

Hierfür eignen sich insbesondere solche Spannfutter, bei welchen sich die am Umfang des Werkstückes greifenden Spannbacken relativ zur im Zentrum geführten Spitze, einer Reitstockspitze, axial vorschieben und zurückziehen lassen, um somit einen Übergang von der Aufnahme zwischen Spitzen zur Spannung am Umfang mittels Backen, und sogar Mischformen aus beiden Aufnahmemöglichkeiten, realisieren zu können.

Vorzugsweise sind die Werkzeugeinheiten auch in Y-Richtung verfahrbar, und ggf. auch um diese Achse, die B-Achse, drehbar, wobei auch zusätzliche Bohrund Fräseinheiten auf einem Werkzeugsupport vorhanden sein können.

Eine entsprechende Maschine verfügt zu diesem Zweck über Spannfutter, die sowohl über Spannspitzen als auch über Spannbacken verfügen, und bei denen die Spannspitzen gegenüber den Spannbacken in axialer Richtung (Z-Richtung) so verlagerbar sind, daß bei Spannung zwischen Spitzen die dann zurückgezogenen Spannbacken die Bearbeitung am Umfang von Endzapfen und Endflansch nicht behindern.

Eine derartige Maschine wird vorzugsweise zwei Bearbeitungseinheiten aufweisen, von denen die eine das Bearbeitungsverfahren Drehräumen oder Dreh-Drehräumen oder eine Kombination hieraus ermöglicht, während die andere das Außenfräsen unter Hochgeschwindigkeit, ermöglicht. Diese mindestens zwei Bearbeitungseinheiten werden insbesondere auch auf separaten und auch separat ansteuerbaren Supporten angeordnet sein, die wenigstens in X-Richtung, vorzugsweise auch in Y-Richtung verlagerbar sind, und ggf. um die B-Achse drehbar.

Die Bearbeitungseinheiten können von der gleichen Seite des Werkstückes angeordnet sein, oder auch auf gegenüberliegenden Seiten, oder im Winkel relativ zueinander. Zusätzlich müssen die Werkzeugeinheiten auch in Z-Richtung entlang des Werkstückes verfahrbar sein, um ihre Bearbeitung an unterschiedlichen Axialpositionen des Werkstückes vollziehen zu können.

Zusätzlich oder auch anstelle einer der Bearbeitungseinheiten kann eine nicht spanende Bearbeitungseinheit vorgesehen sein. Dies könnte eine Wasserstrahlschneidvorrichtung, eine Laserschneidvorrichtung oder eine Einrichtung zur Wärmebehandlung, insbesondere eine Laserhärtevorrichtung sein. Auch eine solche nicht spanende Bearbeitungseinheit ist vorzugsweise in Z-Richtung verfahrbar, ggf. auch in X- und in Y-Richtung.

Eine Bewegung in X-Richtung ist jedoch je nach Bearbeitungsverfahren nicht unbedingt notwendig, da statt einer Veränderung des radialen Abstandes zwischen Werkzeugeinheit und Werkstück z. B. bei einem Laser lediglich die Fokussierung nachgeführt werden muß und analoges auch beim Wasserstrahlschneiden möglich ist.

Insgesamt ergibt die vorhandene Kombination an Bearbeitungsverfahren bzw. Bearbeitungseinheiten die Möglichkeit, auch sehr kleine Losgrößen und sogar Einzelstücke einer bestimmten Kurbelwelle unter noch vertretbarem wirtschaftlichem Aufwand herzustellen, wobei es unwesentlich ist, daß die Bearbeitungszeit in diesem Fall ein Mehrfaches der Bearbeitungszeit bei Großserienherstellung von Kurbelwellen beträgt.

In diesem Zusammenhang ist auch das Härten in der Maschine z. B. mittels Laserstrahl, insbesondere der Lagerflächen, zu sehen, da auf diese Art und Weise vor allem das Ausspannen, Durchlaufen eines separaten Härteprozesses und neu Einspannen der Kurbelwelle in einer anderen Maschine vermieden wird, in der dann die Nachbearbeitung nach dem Härten, insbesondere das Schleifen, vollzogen wird. Zusätzlich erfolgt das Härten nur an den tatsächlich benötigten Stellen, wodurch auch der auftretende Wärmeverzug der Kurbelwelle minimiert bzw. gezielt gesteuert werden kann, indem bestimmte Bereiche der Kurbelwelle in einer bestimmten Art und Weise hinsichtlich Höhe, zeitlicher Reihenfolge und zeitlichem Verlauf der Erwärmung und Abkühlung unterworfen werden.

Ein weiterer Vorteil des Härtens, z. B. mittels Laserstrahl, innerhalb der Maschine liegt darin, daß sogar während der für das Härten erforderlichen Erwärmung von Bereichen der Kurbelwelle mittels Laserstrahl in diesen erwärmten Bereichen eine spanende Bearbeitung mittels eines der vorgenannten Verfahren möglich ist, was die bei der spanenden Bearbeitung auftretenden Kräfte drastisch reduziert. Dabei kann die spanende Bearbeitung auch in der Abkühlungszeit stattfinden bzw. sich in diese hineinerstrecken, so daß während der zeitgleichen Abkühlung und damit dem Auftreten des Wärmeverzuges und der spanenden Bearbeitung der im Endeffekt zurückbleibende Wärmeverzug minimal gehalten werden kann.

Um die extrem unterschiedlichen Drehzahlen des bzw. der Spindelstöcke zum Antrieb des Werkstükkes, wie sie bei den beiden Verfahrensgruppen notwendig sind, realisieren zu können, weisen diese Antriebe beispielsweise neben Motorspindel bzw. Motor ggf. ein schaltbares bzw. ein zuschaltbares Zwischengetriebe auf, welches einen Übersetzungsgrad bzw. Untersetzungsgrad in der Größenordnung von 1:100 aufweisen muß. Gekoppelt mit dem schaltbaren Zwischengetriebe könnte auch die Realisierung der C-Achse am Spindelstock sein, welche lediglich in der langsameren Betriebsart vorhanden sein muß.

### c) Ausführungsbeispiele

Eine Ausführungsform gemäß der Erfindung ist im folgenden anhand der Figuren beispielhaft näher beschrieben. Es zeigen:
- Fig. 1:: eine Maschine zur spanenden Bearbeitung durch zwei Bearbeitungseinheiten in der Frontansicht sowie in der Seitenansicht,
- Fig. 2:: eine ähnliche Maschine in der Seitenansicht,
- Fig. 3:: eine Abwandlung der Maschine gemäß Fig. 1 in der Seitenansicht,
- Fig. 4:: eine Seitenansicht einer gegenüber Fig. 2 abgewandelten Maschine,
- Fig. 5:: eine andere Abwandlung der Seitenansicht der in Fig. 2 dargestellten Maschine, sowie
- Fig.6:: eine Seitenansicht einer weiteren Maschinenform.

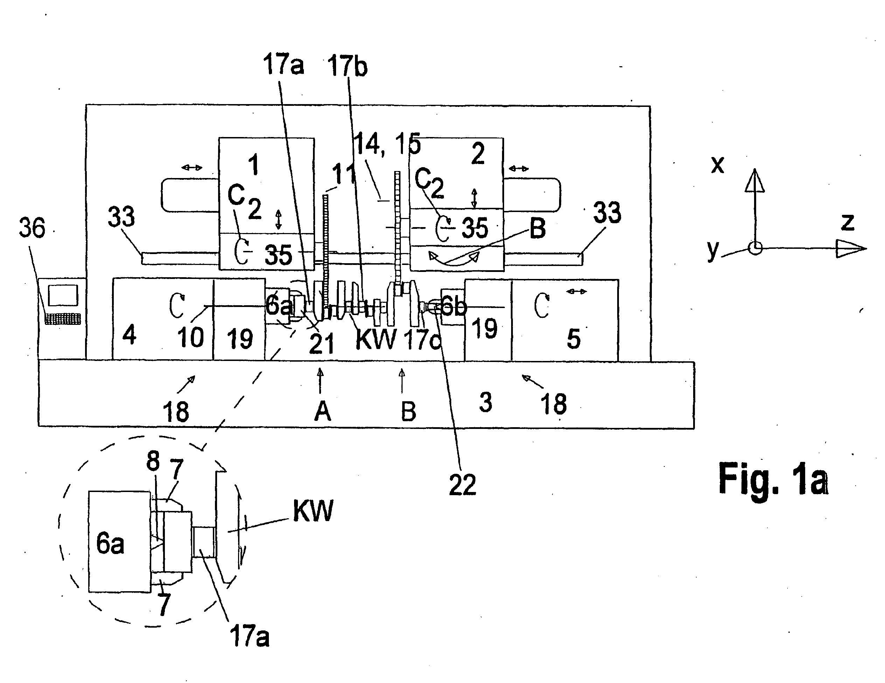

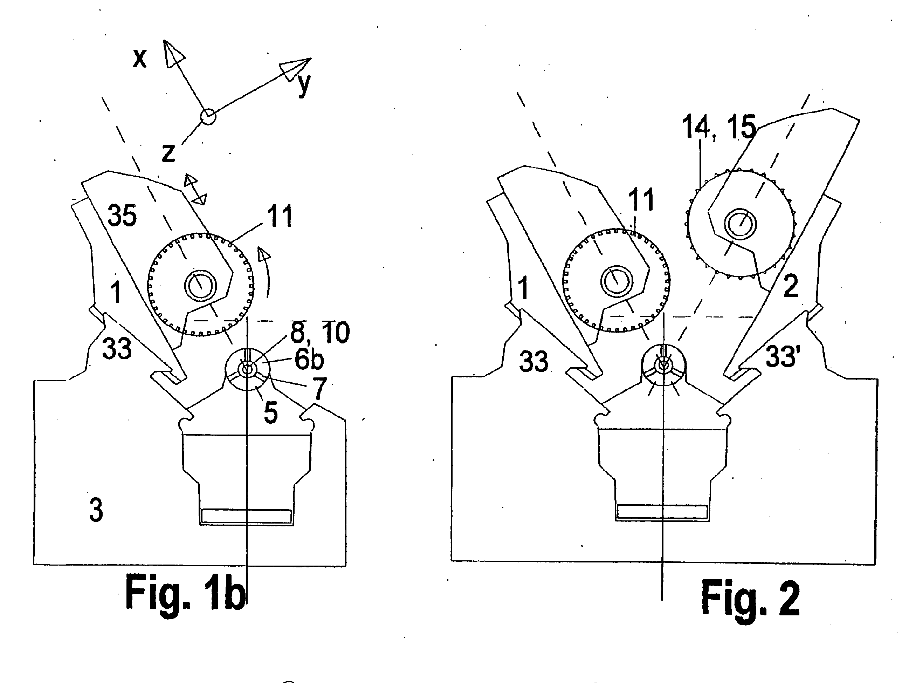

Die Figuren 1a und 1b zeigen eine Vorrichtung zum spanenden Bearbeiten einer Kurbelwelle KW in der Frontansicht sowie in der Seitenansicht, also in Blickrichtung der Längsachse 10 der Kurbelwelle KW.

In der Frontansicht der Fig. 1a ist das Bett 3 der Maschine zu erkennen, auf welchem die beiden Spindelstöcke 4, 5 angeordnet sind, von denen der eine Spindelstock 5 in der axialen, Z-Richtung verfahrbar ist, um ein Einlegen und Entnehmen der Kurbelwelle zu ermöglichen.

Die Kurbelwelle KW ist an den beiden Enden jeweils in einem Futter 6a, 6b gespannt, welches auf einem der Spindelstöcke 4, 5 sitzt und von diesem drehend angetrieben wird. Die Spindelstöcke 4, 5 sind entweder elektronisch oder mechanisch synchronisiert, oder anstelle des einen Spindelstockes 5 ist lediglich ein frei mitlaufender Reitstock ohne eigenen Antrieb vorhanden.

Entlang einer Z-Führung 33 sind parallel zum Werkstück zwei oder mehrere Werkzeugsupporte 1, 2 entlang des Bettes 3 verfahrbar, welche jeweils ein oder mehrere Werkzeuge tragen. Dabei handelt es sich in einem Fall um ein scheibenförmiges Drehfräswerkzeug 11, im anderen Fall um ein scheibenförmiges Drehräumwerkzeug 14 bzw. Dreh-Drehräumwerkzeug 15. Die scheibenförmigen Werkzeuge sind jeweils drehend um eine C₂-Achse parallel zur Z-Richtung antreibbar bzw. schwenkbar, und sind auf einen in X-Richtung, also radial quer zur Kurbelwelle verfahrbaren X-Schlitten 35 angeordnet, welche auf dem Werkzeugsupport 1, 2 angeordnet ist.

Eine zusätzliche Verfahrbarkeit des Fingerfräsers 12 in Y-Richtung erschließt weitere Bearbeitungsmöglichkeiten.

Wie der Seitenansicht der Fig. 1b zu entnehmen, kann es sich dabei um eine Schrägbettmaschine handeln, bei der also die Z-Führung etwa auf der Höhe der Längsachse 10 angeordnet ist, und der X-Schlitten 35 schräg von oben her gegen das in Fig. 1b nicht dargestellte Werkstück, also die Längsachse 10, bewegbar ist.

Während bei der Ausführungsform gemäß Fig. 1b die beiden Werkzeugsupporte 1, 2 in Blickrichtung der Fig. 1b hintereinander angeordnet sind, zeigt Fig. 2 die Seitenansicht einer Bauform, in der das Bett 3 symmetrisch aufgebaut ist, und die beiden Werkzeugsupporte 1, 2 V-förmig so angeordriet sind, daß ihre X-Schlitten unter einem vorzugsweise spitzen Winkel zueinander verfahrbar gegen die Längsachse 10 der Maschine sind.

In der Frontansicht der Fig. 1a sind das Drehfräswerkzeug 11 und das Drehräumwerkzeug 14 im gleichzeitigen Einsatz dargestellt, was in der Praxis der eher seltene Fall sein dürfte.

Mittels des Drehfräswerkzeuges 11 werden wie ersichtlich vorzugsweise die Hublager 16a - 16c bearbeitet. Das Drehfräswerkzeug 11 muß also einen solchen Durchmesser besitzen und über seinen ihn tragenden X-Schlitten 35 radial, in X-Richtung, so weit vorstehen, daß die Bearbeitung der Hublager trotz der Längsachse 10 weiter abstrebenden Wangen kollisionsfrei möglich ist. Auch die Wangenstirnflächen und ggf. Wangenumfangsflächen werden mittels des Drehfräsers 11 bearbeitet.

Die Kurbelwelle KW steht dabei still (vorzugsweise beim nur radialen Eintauchen des Drehfräswerkzeuges 11) bzw. dreht sich langsam (beim tangentialen Eintauchen) um mindestens eine volle Umdrehung, bis der Hublagerzapfen 16, ggf. einschließlich seiner Spiegelflächen und der angrenzenden Wangenstirnflächen -fertig bearbeitet ist. Dabei ist teilweise die Kenntnis der Drehlage der Kurbelwelle KW notwendig, also eine gesteuerte C-Achse des Spindelstockes bzw. der Spindelstöcke 4, 5 sowie eine definierte Drehlage der Kurbelwelle KW bezüglich der Futter 6a, 6b.

Im Gegensatz dazu bearbeitet das Drehräumwerkzeug 14 bzw. Dreh-Drehräumwerkzeug 15 die Mittellager 17, ggf. ebenfalls einschließlich der Ölbünde, Spiegelflächen etc. Dabei wird die Kurbelwelle KW sehr schnell drehend angetrieben, ohne daß die genaue Drehlage bekannt sein muß, während das Drehräumwerkzeug 14 bzw. 15 relativ langsam parallel zur Kurbelwelle rotiert bzw. verschwenkt wird, oder sich überhaupt nicht dreht, während lediglich mit einer Schneide des Werkzeuges eine Einstech-Drehbearbeitung vorgenommen wird. Eine Maschinensteuerung 36 koordiniert die Z- und X-Bewegung der Werkzeuge, die Drehbewegungen bzw. Schwenkbewegungen der Werkzeuge und ggf. die Drehzahl bzw. ggf. auch die Winkelstellung der Kurbelwelle KW.

Um mit einer solchen Maschine eine rohe Kurbelwelle möglichst in einer Aufspannung fertigbearbeiten zu können, also auch den Endflansch 21 und den Endzapfen 22 mitbearbeiten zu können, sind spezielle Futter 6a, 6b verwendet, wie in der Detailvergrößerung der Fig. 1a dargestellt:

Diese Futter können einerseits über jeweils eine zentrale Spitze 8 verfügen, mit deren Hilfe in bekannter Weise das Werkstück durch Eingreifen in eine stirnseltige Zentrierbohrung in Spitzen gespannt werden kann.

Darüber hinaus verfügt dieses Futter über insbesondere rückziehbare, die schwimmend oder zentrierend das Werkstück an einem Außenumfang spannen.

Für das Bearbeiten der rohen, geschmiedeten oder gegossenen Kurbelwelle, die lediglich als Vorbearbeitung die genannten Zentrierbohrungen aufweist, wird die Kurbelwelle zunächst an den Enden zwischen den Spitzen 8 aufgenommen und

Drehmoment aufgebracht, und in dieser Aufspannung z. B. eines der in der Längsmitte befindlichen Mittellager, z. B. 17b, mittels, Drehräumen oder Dreh-Drehräumen am Umfang bearbeitet. Diese erste bearbeitete Stelle dient dann zum Ansetzen einer Stützvorrichtung, Linette oder Ähnlichem, über welche auch der Drehantrieb der Kurbelwelle erfolgen kann (nicht dargestellt). Mit dieser Abstützung/Antrieb ist es nunmehr möglich, mit den vorhandenen Werkzeugen den Endflansch 21 sowie den Endzapfen 22 am Umfang und ggf. auch an der außenliegenden Stirnfläche bis in die Nähe der Zentrierbohrung zu bearbeiten. Anschließend kann die Kurbelwelle an diesen bearbeiteten Umfangsflächen von Endflansch 21 und Endzapfen 22 mittels der Spannbacken 7 gespannt und die Kurbelwelle an allen anderen gewünschten Stellen bearbeitet werden.

Zu diesem Zweck greifen vorzugsweise die Backen 7 schwimmend oder zentrierend am Umfang von Endflansch bzw. Endzapfen, ohne daß vorher oder gleichzeitig die Spannung zwischen den Spitzen 8 aufgegeben wird, um keine Positionierfehler der Kurbelwelle KW gegenüber den Spannfuttern 6a, 6b zu bewirken.

Um dies zu ermöglichen, sind die Backen 7 in axialer Z-Richtung relativ zu den Spitzen 8 verlagerbar und vor allem soweit gegenüber den Spitzen 8 zurückziehbar, daß keine Kollision bei der Bearbeitung der Enden der Kurbelwelle auftreten kann.

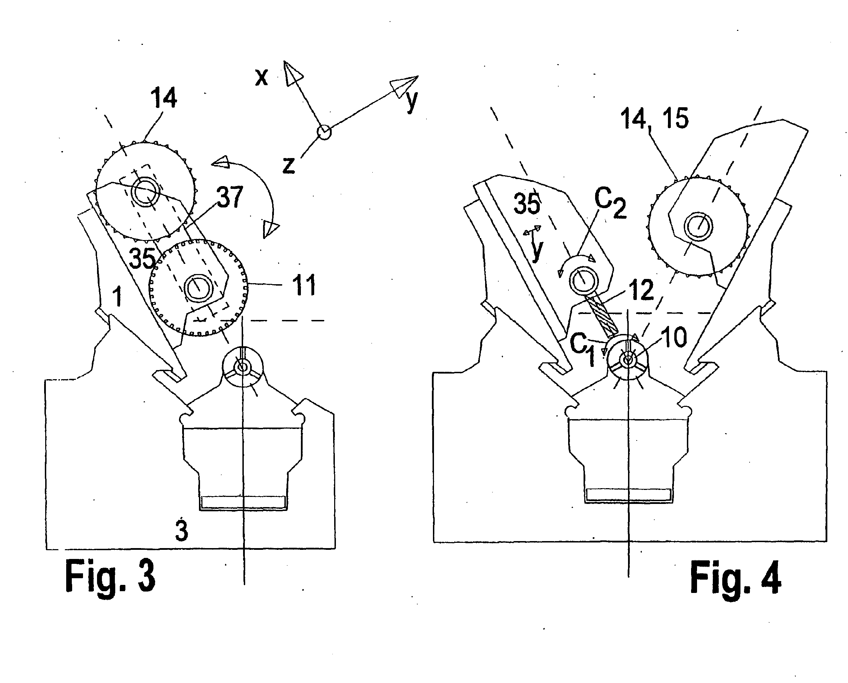

Fig. 3 zeigt demgegenüber eine Bauform einer Maschine in der Seitenansicht, bei der auf einem einzigen, in Z-Richtung verfahrbaren Werkzeugsupport 1 zwei scheibenförmige Werkzeuge, nämlich einerseits ein Außenfräswerkzeug 11 und andererseits ein Drehräumwerkzeug 14, auf einem Schwenkträger 37 angeordnet sind, welcher wiederum auf dem X-Schlitten 35 positioniert ist. Ausgehend von der Überlegung, daß unter völlig unterschiedlichen notwendigen Drehzahlen des Werkstückes beim Außenfräsen einerseits und beim. Drehräumen bzw. Dreh-Drehräumen andererseits können die beiden Werkzeuge in der Regel nicht gleichzeitig am Werkstück zum Einsatz kommen, so daß die Anordnung auf einem gemeinsamen Werkzeugsupport den Aufbau eines zweiten Supportes erspart bzw. Platz für weitere Bearbeitungseinheiten schafft.

Auch in diesem Fall ist der X-Schlitten schräg von oben nach unten gegen das Werkstück verfahrbar, und das Werkstück befindet sich über einer Spänewanne, die im Maschinenbett 3 ausgebildet ist.

Fig. 4 zeigt eine Lösung ähnlich Fig. 2, wobei jedoch das Außenfräswerkzeug 11 durch einen Fingerfräser 12 ersetzt ist. Dieser ist in der Regel auf dem X-Schlitten 35 nicht drehbar, sondern lediglich schwenk- ' bar um eine parallel zur Y-Achse 10 angeordnete C₂-Achse verschwenkbar, um eine Nachführung der Stirnfläche des fingerförmigen Fingerfräsers 12, an welchem die einzige stirnseitige Schneide dargestellt ist, mit den Hublagerzapfen der rotierenden Kurbelwelle zu ermöglichen.

Alternativ dazu ist es auch möglich, das Werkzeug, also beispielsweise den Fingerfräser 12, anstatt des Verschwenkens auch in der zweiten Querrichtung zur Werkstücklängsachse, der Y-Richtung, beweglich am Werkzeugsupport anzuordnen, und eine gesteuerte Überlagerung der X- und Y-Bewegung in der Nachführung bezüglich des zu bearbeitenden Werkstückes zu erzielen.

Der fingerförmige Fingerfräser 12 bearbeitet mit seinen stirnseitigen Schneiden eine Umfangsfläche des Werkstückes. Bei Verwendung nur einer einzigen radial von der Mitte des Fingerfräsers nach außen laufenden stirnseitigen Schneide ergeben sich besonders gute Oberflächen am bearbeiteten Werkstück.

Die meist spiralförmigen Schneiden auf der Mantelfläche des Fingerfräsers dienen der Bearbeitung von Stirnflächen am Werkstück, also beispielsweise von Wangenstirnflächen.

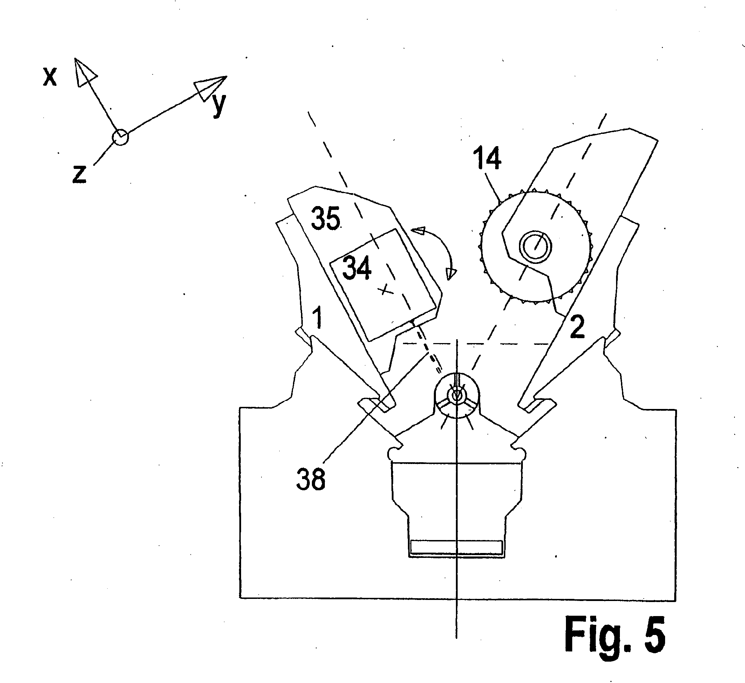

Fig. 5 zeigt eine Maschine in der Seitenansicht, die von ihrem Aufbau dem Aufbau in der Fig. 2 bzw. 4 entspricht. Auf dem Werkzeugsupport 1 ist jedoch anstelle eines spanenden Werkzeuges eine nichtspanende Bearbeitungseinheit angeordnet, welche wiederum gegenüber dem Werkzeugsupport, insbesondere deren X-Schlitten 35, entweder um eine in Z-Richtung verlaufende Achse schwenkbar oder zusätzlich in Y-Richtung gesteuert verlagerbar ist.

Bei einer solchen nichtspanenden Bearbeitungseinheit kann es sich beispielsweise um eine Laserschneideinheit, eine Laserhärteeinheit oder um eine Wasserstrahischneideinheit handeln, weshalb symbolisch ein austretender Strahl 38 eingezeichnet ist: Bei ausreichender Bündelung des Strahles kann die nichtspanende Bearbeitungseinheit 34 während der Arbeit am Werkstück soweit von diesem entfernt sein, daß es möglich ist, selbst bei der V-förmigen Anordnung der Werkzeugsupporte 1 und 2, wie in Fig. 5 dargestellt, an der gleichen Bearbeitungsstelle das Werkzeug, beispielsweise ein Drehräumwerkzeug 14, des anderen Supportes 2 zum Einsatz zu bringen, ohne daß Kollisionen zu befürchten sind.

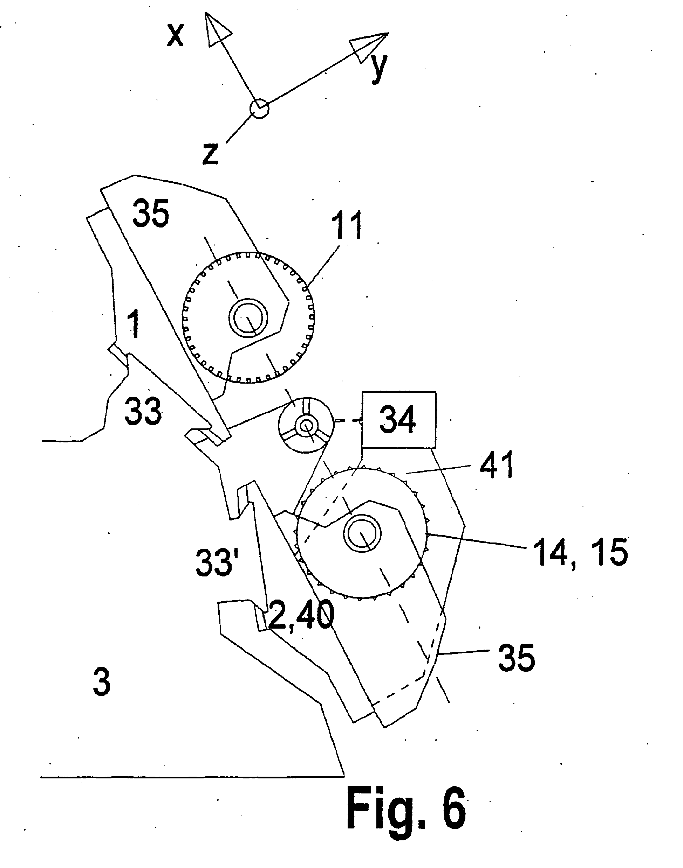

Demgegenüber zeigt Fig. 6 - ebenfalls in der Seitenansicht - eine Maschine, bei der zwei Werkzeugsupporte 1,2 auf gegenüberliegenden Seiten des Werkstückes angeordnet sind, und deren X-Schlitten 35 vorzugsweise in der gleichen X-Ebene aus gegeneinander gegen das in Fig. 6 nicht dargestellte Werkstück, also gegen die Längsachse 10 der Maschine, verfahrbar sind.

Dabei tragen die Supporte 1 und 2, wie in den Figuren 1 und 2 beschrieben, einerseits ein drehbares scheibenförmiges Drehfräswerkzeug 11 und andererseits ein drehbares bzw. schwenkbares, scheibenförmiges Drehräumwerkzeug 14 bzw. Dreh-Drehräumwerkzeug 15. Zusätzlich ist in der Fig. 6 jedoch auf einer der beiden Z-Führungen 33, 33' des Bettes 3 ein weiterer Werkzeugsupport 40 verfahrbar, welcher eine bereits anhand der Fig. 5 vorbeschriebene und erläuterte nichtspanende Bearbeitungseinheit 34 trägt. Die nichtspanende Bearbeitungseinheit 34 ist auch hier entweder gegenüber dem sie tragenden X-Schlitten 41 entweder verschwenkbar um eine Achse parallel zur Z-Richtung, oder in Y-Richtung, also quer zur Bewegungsrichtung des X-Schlittens und quer zur Längsachse 10, gesteuert verlagerbar.

### BEZUGSZEICHENLISTE

- 1: Werkzeugsupport
- 2: Werkzeugsupport
- 3: Bett
- 4: Spindelstock
- 5: Spindelstock
- 6a,6b: Futter
- 7: Backen
- 8: Spitzen
- 10: Längsachse
- 11: Außenfräser
- 12: Fingerfräser
- 13: Drehwerkzeug
- 14: Drehräumwerkzeug
- 15: Dreh-Drehräumwerkzeug
- 16: Hublagerzapfen
- 17: Mittellagerzapfen
- 18: Antrieb
- 19: Zwischengetriebe
- 20: Kurbelwelle
- 21: Endflansch
- 22: Endzapfen
- 23: Wangenstirnfläche
- 27: Fräser-Antrieb
- 28: Drehräum-Antrieb
- 31: X Antrieb 1
- 32: X Antrieb 2
- 33: Z-Führung
- 34: nichtspanende Bearbeitungseinheit
- 35: X-Schlitten
- 37: Schwenkträger
- 38: Strahl
- 40: Werkzeugsupport
- 41: X-Schlitten

## Patentansprüche

1. Verfahren zur spanenden Bearbeitung von Werkstücken mit rotationssymmetrischen auch exzentrischen Flächen, insbesondere Kurbelwellen oder Nockenwellen, indem die Bearbeitung des Werkstückes
**dadurch gekennzeichnet ist, dass**
- **sie** sowohl durch solche Verfahren bewirkt wird, bei denen die Schnittgeschwindigkeit primär durch die Drehung des Werkstückes erzeugt wird,
- als auch durch Hochgeschwindigkeits-Fräsen,
- wobei die Bearbeitung der Mittellager durch Drehräumen **oder** Dreh-Drehräumen erfolgt und die Bearbeitung der Hublagerzapfen und Wangenstirnflächen in der gleichen Aufspannung durch Außenfräsen.

2. Verfahren nach einem der vorhergehenden Ansprüche,
**dadurch gekennzeichnet, daß**
die Bearbeitung des Werkstückes an mehreren Stellen gleichzeitig geschieht.

3. Verfahren nach einem der vorhergehenden Ansprüche,
**dadurch gekennzeichnet, daß**
das Drehräumen/Dreh-Drehräumen auch nach dem Härten der zu bearbeitenden Bereiche des Werkstückes, insbesondere der Kurbelwelle geschieht.

4. Verfahren nach einem der vorhergehenden Ansprüche,
**dadurch gekennzeichnet, daß**
das Härten ohne Entfernen des Werkstückes aus der Maschine für die spanende Bearbeitung geschieht, und das Härten mittels Laser oder eines Induktors geschieht.

5. Verfahren nach einem der vorhergehenden Ansprüche,
**dadurch gekennzeichnet, daß**
ein gezielter Materialabtrag mittels Laserstrahl bewirkt wird, oder ein gezielter Materialabtrag mittels Wasserstrahl bewirkt wird.

6. Verfahren nach einem der vorhergehenden Ansprüche,
**dadurch gekennzeichnet, daß**
auch der Endflansch (21) und/oder der Endzapfen (22) der Kurbelwelle innerhalb des gleichen Arbeitsprozesses, ohne Entfernung aus der die Bearbeitung der übrigen Bereiche vornehmenden Maschine, bearbeitet werden.

7. Verfahren nach einem der vorhergehenden Ansprüche,
**dadurch gekennzeichnet, daß**
die Bearbeitung einer Kurbelwelle geschieht, indem
- bei einer Spannung der Kurbelwelle (20) zwischen Spitzen (8a, 8b) ein Mittellager (17a), insbesondere ein in der Mitte der axialen Erstreckung befindliches Mittellager (17b) mittels Drehräumen oder Dreh-Drehräumen am Lagerumfang bearbeitet wird,
- an dem bearbeiteten Mittellager (z. B. 17b) eine Abstützung der Kurbelwelle zusätzlich zur Spitzenspannung erfolgt und in dieser Spannung nacheinander oder gleichzeitig die Bearbeitung von Endflansch (21) und Endzapfen (22), wenigstens an deren Umfangsflächen durch Drehräumen oder Dreh-Drehräumen vorgenommen wird,
- die Spannung der Kurbelwelle nunmehr an den bearbeiteten Umfangsflächen von Endflansch (21) und Endzapfen (22) geschieht und im folgenden
- die Bearbeitung der Mittellager wenigstens an der Umfangsfläche durch Drehräumen oder Dreh-Drehräumen vorgenommen wird und
- die Bearbeitung der Hublager (16) am Umfang sowie der Wangenstirnflächen (23) durch Außenfräsen vorgenommen wird.

8. Verfahren nach Anspruch 7,
**dadurch gekennzeichnet, daß**
vor dem Anlegen der Spannung an den Umfangsflächen von Endflansch und/oder Endzapfen die Spitzenspannung wenigstens teilweise aufgegeben wird zur Entspannung der Kurbelwelle (20).

9. Vorrichtung zum spanenden Bearbeiten von Werkstücken mit rotationssymmetrischen Flächen, insbesondere von Kurbelwellen (20) mit
- wenigstens zwei Werkzeugsupporten (1, 2), die unabhängig voneinander wenigstens in einer Richtung (X-Richtung) quer zur Kurbelwellenlängsachse (10) (Z-Richtung) bewegbar sind, wobei
- ein Werkzeugsupport (1) ein scheibenförmiges Drehfräswerkzeug (11) oder ein Orthogonalfräswerkzeug (12) trägt und
- der andere Werkzeugsupport (2) ein Drehwerkzeug (13) oder ein scheibenförmiges Drehräum- bzw. Dreh-Drehräumwerkzeug (14), und
- das Außenfräswerkzeug (11) einen ausreichend großen Durchmesser besitzt, um einen vom Werkzeugsupport (1) abgewandten Hublagerzapfen (16) auf dessen Innenseite bearbeiten zu können,
- die Werkzeugsupporte (1, 2) auch parallel zur Längsachse (10), in Z-Richtung, verfahrbar sind,
- die Vorrichtung zwei Spindelstöcke (4, 5) zum Spannen und synchronen Antreiben der Enden der Kurbelwelle (20) aufweist und die Spindelstöcke (4, 5) mit einem Antrieb (18) ausgestattet sind, dessen Drehzahlbereich von 0 bis 1.500 U/min reicht, und
- die Futter (6a, 6b) der Vorrichtung zum beidseitigen Einspannen der Kurbelwelle einerseits Backen (7) zum Spannen am Umfang und andererseits Spitzen (8) zur Spannung zwischen Spitzen aufweisen, wobei die Backen (7) relativ zur Spitze (8) desselben Futters (6a, 6b) in axialer Z-Richtung soweit bewegbar sind, dass eine in der Spitze (8) gehaltene Kurbelwelle (20) nicht mehr im Bereich der Backen (7) des gleichen Futters liegt.

10. Vorrichtung nach Anspruch 9,
**dadurch gekennzeichnet, dass** das Orthogonalfräswerkzeug (12) ein Fingerfräser (12) ist, der
eine so große Länge besitzt, um einen vom Werkzeugsupport (1) abgewandten Hublagerzapfen (16) auf dessen Innenseite bearbeiten zu können, und das scheibenförmige Drehräumwerkzeug (14) bzw. Dreh-Drehräumwerkzeug (15) einen so großen Durchmesser aufweist, um einen Mittellagerzapfen (17) bearbeiten zu können, ohne mit den Hublagerzapfen (16) bzw. den Wangen zu kollidieren.

11. Vorrichtung nach Anspruch 10,
**dadurch gekennzeichnet, daß**
der Antrieb (18) für die Spindelstöcke (4 bzw. 5) ein schaltbares Zwischengetriebe (19) mit einem Übersetzungsfaktor bzw. Untersetzungsfaktor von mindestens 50, insbesondere 70, insbesondere 100 umfaßt, und das Zwischengetriebe (19) eine Schneckenrad/Schnecken-Paarung umfaßt, oder das Zwischengetriebe (19) ein Planetengetriebe umfaßt.

12. Vorrichtung nach einem der vorhergehenden Vorrichtungsansprüche,
**dadurch gekennzeichnet, daß**
wenigstens in der langsamen Betriebsstufe des Spindelstock-Antriebes (18) die gesteuerte C-Achse verfügbar ist und davon abhängig die Bewegungen der Werkzeugsupporte (1, 2) in X- und Z-Richtung steuerbar sind.

## Claims

1. A method of machining cutting of workpieces with rotationally symmetrical, even eccentric surfaces, in particular crankshafts or camshafts, insofar as machining of the workpiece is
**characterized in that**
- it is effected both by such methods in which the cutting speed is produced primarily by the rotation of the workpiece,
- and also by high-speed milling,
- whereby the machining of the central bearings is realized by rotational broaching or turning-rotational broaching and the machining of the crank throw bearings and of the crank side cheek end faces is effected in one clamping configuration by external milling.

2. A method as set forth in one of the preceding claims
**characterised in that** machining of the workpiece is effected simultaneously at a plurality of locations.

3. A method as set forth in one of the preceding claims
**characterised in that** in particular rotational broaching/ turning-rotational broaching is effected even after hardening of the regions of the workpiece, in particular the crankshaft, which are to be machined.

4. A method as set forth in one of the preceding claims
**characterised in that** hardening is effected without removing the workpiece from the machine for the cutting machining procedure, and that hardening is effected by means of laser or of an inductor.

5. A method as set forth in one of the preceding claims
**characterised in that** targeted removal of material is effected by means of laser beam or targeted removal of material is effected by means of water jet.

6. A method as set forth in one of the preceding claims
**characterised in that** the end flange (21) and/or the end journal (22) of the crankshaft is also machined within the same working procedure, in particular without removal from the machine which implements machining of the remaining regions.

7. A method as set forth in one of the preceding claims
**characterised in that** machining of a crankshaft is effected by a procedure whereby
- when the crankshaft (20) is held between points (8a, 8b) a central bearing (17a), in particular a central bearing (17b) disposed at the center of the axial extent, is machined by means of rotational broaching or turning-rotational broaching at the bearing periphery,
- support for the crankshaft in addition to being held between points is effected at the machined central bearing (for example 17b) and **in that** clamping condition simultaneously or successively machining of the end flange (21) and end journal (22) is effected at least at the peripheral surfaces thereof by rotational broaching or turning-rotational broaching,
- clamping of the crankshaft is now effected at the machined peripheral surfaces of the end flange (21) and the end journal (22) and thereafter
- machining of the central bearings at least at the peripheral surface is effected by rotational broaching or turning-rotational broaching, and
- machining of the crank throw bearings (16) at the periphery and possibly of the crank side cheek end faces (23) is effected by external milling or rotary milling.

8. A method as set forth in claim 7
**characterised in that** prior to applying the clamping action at the peripheral surfaces of the end flange and/or the end journal, the mounting between points is at least partially abandoned to release the crankshaft (20).

9. Apparatus for the cutting machining of workpieces having rotationally symmetrical surfaces, in particular crankshafts (20), comprising
- at least two tool supports (1, 2) which are mutually independently movable at least in one direction (X-direction) transversely with respect to the crankshaft longitudinal axis (10) (Z-direction),
**characterized in that**
- a tool support (1) carries a disk-shaped rotary milling tool (11) or an orthogonal milling tool (12), and
- the other tool support (2) carries a turning tool (13) or a disk-shaped rotational broaching or turning-rotational broaching tool (14), and
- the external milling tool (11) is of a sufficiently large diameter as to be able to machine a crank throw bearing journal (16) which is remote from the tool support (1), on the inside of said journal, and
- the tool supports (1, 2) are also displaceable parallel to the crankshaft longitudinal axis (10) in the Z-direction,
- the apparatus has two spindlestocks (4, 5) for clamping and synchronously driving the ends of the crankshaft (20), and the spindlestock (4, 5) are provided with a drive (18) whose rotary speed range extends between 0 and 1500 rpm, and
- the chucks (6a, 6b) of the apparatus for clamping the crankshaft at both sides have on the one hand jaws (7) for clamping it at the periphery and on the other hand points (8) for clamping between points, wherein the jaws (7) are movable relative to the point (8) of the same chuck (6a, 6b) in the axial Z-direction to such an extent that a crankshaft (20) held at the point (8) is no longer in the region of the jaws (7) of the same chuck.

10. Apparatus as set forth in claim 9
**characterised in that** orthogonal milling tool (12) is a finger milling cutter (12) which is of such a great length as to be able to machine a crank throw bearing journal (16) which is remote from the tool support (1), on the inside of said journal, and that the disk-shaped rotational broaching tool (14) or the turning-rotational broaching tool (15) is of such a large diameter as to be able to machine a central bearing journal (17) without colliding with the crank throw bearing journals (16) or the crank throw side cheeks.

11. Apparatus as set forth in claim 10
**characterised in that** the drive (18) for the spindlestocks (4 or 5 respectively) includes a shiftable intermediate transmission (19) with a step-up ratio or step-down ratio of at least 50, in particular 70, especially 100, and that the intermediate transmission (19) includes a worm gear/worm pairing or that the intermediate transmission (19) includes a planetary transmission.

12. Apparatus as set forth in one of the preceding apparatus claims
**characterised in that** at least in the slow operating stage of the spindlestock drive (18) the controlled C-axis is available and in dependence thereon the movements of the tool supports (1, 2) in the X- and Z-direction are controllable.

## Revendications

1. Procédé pour l'usinage par enlèvement de copeaux de pièces d'usinage comprenant des surfaces symétriques en rotation et également excentriques, en particulier des vilebrequins ou des arbres à came, dans le fait que l'usinage de la pièce à usiner est **caractérisé en ce qu'**il
- est provoqué aussi bien par des procédés où la vitesse de coupe est générée de manière primaire par la rotation de l'outil à usiner,
- qu'également par des fraises à grande vitesse,
- et l'usinage des paliers médians se produit par brochage par tournage ou par tournage-brochage par tournage et l'usinage des paliers de levage et des surfaces frontales de joues se produit dans le même dispositif de fixation par fraisage de profil.

2. Procédé selon l'une des revendications précédentes, **caractérisé en ce que** l'usinage de la pièce s'effectue simultanément en plusieurs endroits.

3. Procédé selon l'une des revendications précédentes **caractérisé en ce qu'**en le brochage par tournage/le tournage-brochage par tournage s'effectue également après la trempe des zones à usiner de la pièce, en particulier du vilebrequin.

4. Procédé selon l'une des revendications précédentes, **caractérisé en ce que** la trempe s'effectue sans retrait de la pièce hors de la machine pour l'usinage par enlèvement de copeaux et la trempe s'effectue par laser ou au moyen d'un inducteur.

5. Procédé selon l'une des revendications précédentes, **caractérisé en ce qu'**un enlèvement ciblé de matériau est exécuté par rayon laser ou qu'un enlèvement ciblé de matériau est exécuté par jet d'eau.

6. Procédé selon l'une des revendications précédentes, **caractérisé en ce qu'**également la bride d'extrémité (21) et/ou le tourillon d'extrémité (22) du vilebrequin sont usinés dans la même étape de travail, en particulier sans retrait de la machine effectuant l'usinage des zones restantes.

7. Procédé selon l'une des revendications précédentes, **caractérisé en ce que** l'usinage d'un vilebrequin se déroule dans le fait
- que par un serrage du vilebrequin (20) entre des pointes (8a, 8b), un palier médian (17a), en particulier un palier médian (17b) se trouvant au milieu de l'extension axiale est usiné sur la périphérie par brochage par tournage ou tournage-brochage par tournage,
- sur le palier médian usiné (par exemple 17b), il se produit un soutien du vilebrequin en plus du serrage des pointes et dans ce serrage, il se produit simultanément ou successivement l'usinage de bride d'extrémité (21) et de tourillon d'extrémité (22) au moins sur leurs surfaces périphériques par ou brochage par tournage ou tournage-brochage par tournage,
- le serrage du vilebrequin s'effectue désormais sur les surfaces périphériques usinées de la bride d'extrémité (21) et du tourillon d'extrémité (22) et dans ce qui suit
- l'usinage des paliers médians est effectué au moins sur la surface périphérique par brochage par tournage ou tournage-brochage par tournage et
- l'usinage des paliers de levage (16) est effectué sur la périphérie ainsi que des surfaces frontales de joues (23) par fraisage de profil respectivement par fraisage rotatif.

8. Procédé selon la revendication 7, **caractérisé en ce qu'**avant l'application du serrage contre les surfaces périphériques de la bride d'extrémité et/ou du tourillon d'extrémité, le serrage des pointes est au moins partiellement abandonné pour le desserrage du vilebrequin (20).

9. Dispositif pour l'usinage par enlèvement de copeaux de pièces à usiner avec des surfaces symétriques en rotation, en particulier de vilebrequins (20) comprenant
- au moins deux porte-outils (1, 2) qui sont mobiles indépendamment l'un de l'autre dans une direction (le sens des X) transversalement à l'axe longitudinal (10) du vilebrequin (sens des z), **caractérisé en ce que**
- au moins un porte-outils (1) porte un outil de fraisage rotatif en forme de disque (11) ou un outil de fraisage orthogonal (12) et
- **en ce que** l'autre porte-outils (2) porte un outil de tournage (13) ou un outil (14) de brochage par tournage ou de tournage-brochage par tournage et
- l'outil de fraisage de profil (11) possède un diamètre suffisamment grand pour pouvoir usiner un tourillon de levage (16) détourné du porte-outil (1) et
- les portes-outils (1, 2) sont mobiles également parallèlement à l'axe longitudinal (10) dans le sens des Z,
- le dispositif possèdent deux poupées porte-fraise (4, 5) pour le serrage et l'entraînement synchrone des extrémités du vilebrequin (20) et les poupées pore-fraise (4, 5) sont munies d'un entraînement (18) dont la plage de nombre de tours est comprise entre 0 et 1500 t/min, et
- les mandrins (6a, 6b) du dispositif pour le serrage bilatérale du vilebrequin présentent d'un côté des mâchoires (7) pour le serrage sur la périphérie et de l'autre côté des pointes (8) pour le serrage entre les pointes, les mâchoires (7) étant mobiles par rapport à la pointe (8) du même mandrin (6az, 6b) dans le sens axial Z suffisamment pour qu'un vilebrequin (20) maintenu dans la pointe (8) ne se trouve plus à proximité des mâchoires (7) du même mandrin.

10. Dispositif selon la revendication 9,
**caractérisé en ce que** l'outil de fraisage orthogonal (12) est une fraiseuse à queue (12) qui possède une longueur suffisante pour pouvoir usiner un tourillon dd levage (16) détourné du porte-outil (1) sur sa face interne et l'outil de brochage par tournage en forme de disque (14) respectivement l'outil de tournage-brochage par tournage (15) présentent un diamètre suffisant pour pouvoir usiner un tourillon de levage (17) sans entrer en collision avec les tourillons de levage (16) respectivement ses flancs.

11. Dispositif selon la revendication 10, **caractérisé en ce que** l'entraînement (18) pour les poupées porte-fraise (4, respectivement 5) comprend un engrenage intermédiaire embrayable (19) avec un facteur de démultiplication respectivement de réduction d'au moins 50, en particulier de 70, en particulier de 100 et l'engrenage intermédiaire (19) comprend une paire de vis hélicoïdale/roue hélicoïdale ou l'engrenage intermédiaire (19) comprend un engrenage planétaire.

12. Dispositif selon l'une des revendications précédentes de dispositif, **caractérisé en ce qu'**au moins dans l'étape de fonctionnement lent de l'entraînement (18) du porte-poupée, l'axe C commandé est disponible et en conséquence, les mouvements des porte-outils (1, 2) sont commandables dans le sens des X et des Z.
